# EUROPEAN PATENT SPECIFICATION

(11) **EP 1 948 484 B1**
(45) Date of publication and mention of the grant of the patent: **11.01.2012**
(21) Application number: 06788614.3
(22) Date of filing: 26.07.2006
(51) Int. Cl.: B63C 9/15

(54) **INFLATOR MANIFOLD**
AUFBLASVORRICHTUNGSVERTEILER
RAMPE DE GONFLAGE

(30) Priority: 27.07.2005 US 702923 P
(43) Date of publication of application: 30.07.2008
(73) Proprietor: Sagittarius Sporting Goods, Co. Ltd., Jimei Xiamen 361024 (CN); Courtney, William L., Elk, CA 95432 (US)
(72) Inventor: VAN CAMP, Allen, Fruitland, ID 83619 (US)
(74) Representative: Benson, Christopher
(86) International application number: PCT/US2006/029113
(87) International publication number: WO 2007/016204

(56) References cited:
- GB-A- 685 080
- US-A- 1 463 735
- US-A- 4 946 130
- US-A- 5 058 932
- US-A- 5 058 932
- US-A- 5 271 525
- US-A- 5 271 525
- US-A1- 2002 134 428
- US-B1- 6 167 900
- US-B1- 6 167 900

## Description

### 1. Field of the Invention

The present invention relates generally to inflator manifolds and more particularly to a unibody single mold inflator manifold used with an inflatable article.

### 2. Background of the Invention

Prior art manifold designs use two or more molds including a metal or copper stem and means to secure them together. Other designs chose to be backwards compatible with the size of older inflators on the market and thus also require a "D" shaped stem.

### SUMMARY OF THE INVENTION

The present invention provides an inflator manifold preferably made of all sealable plastic and having a screw-in valve inserted therein prior to sealing an outer end of the manifold through an inserted plug. The preferred all plastic construction enables the manifold to be more salt water resistant over long periods of time, as compared to prior metal or copper manifolds. A metal sleeve can be secured to the stem of the manifold by placing metal in molding or other securing method in order to increase the strength of a metal clip connection to the manifold in a quick release embodiment. The addition of a metal sleeve helps to prevent the metal clip from wearing down or otherwise harming the stem portion of the single molded plastic inflator manifold. The present invention inflator manifold offers more drowning protection to the user by allowing them more options on their inflation means, maintenance and assembly of the end product.

GB-685080 discloses the preamble of claim 1. So also does US-A-5058932. US-A-4946130 relates to a flow control device, but otherwise may be regarded as having the features of the preamble of claim 1. US-B1-6167900 discloses a valve stem with a slidable and rotatable air-tight coupling for removably attachable devices. US-A-5271525 discloses an inflation manifold for a life-jacket including a puncture pin.

### BRIEF DESCRIPTION OF THE DRAWINGS

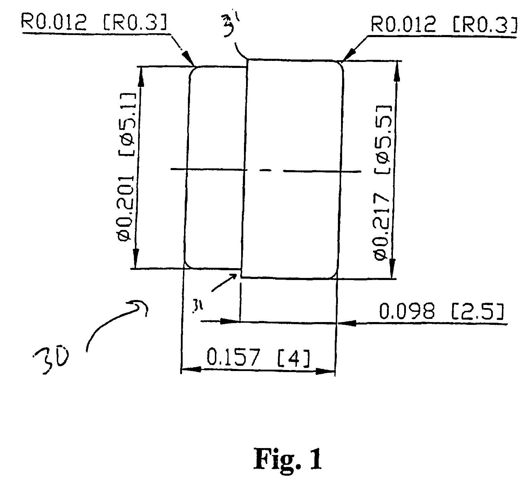

Figure 1 is a sectional view the inflator manifold in accordance with the present invention;

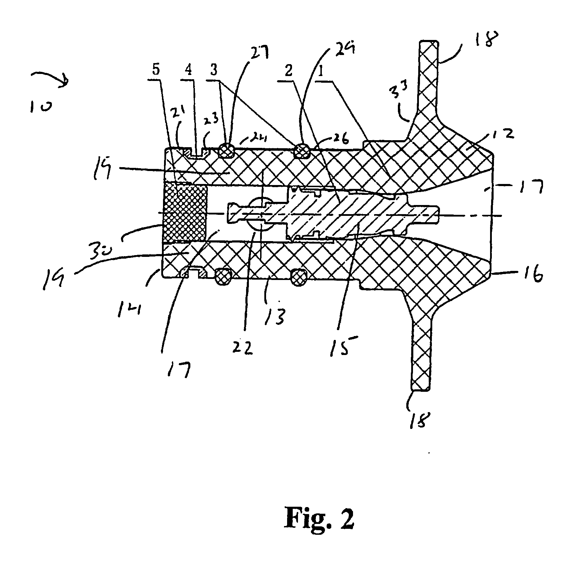

Figure 2 is a side view of an end plug in accordance with the present invention;
Figure 3 constitutes several views of a clip which is removably attachachable to the inflator manifold of Figure in accordance with the present invention;
Figure 4 constitutes several full and sectional views of the single mold body member for the inflator manifold of Figure 1; and

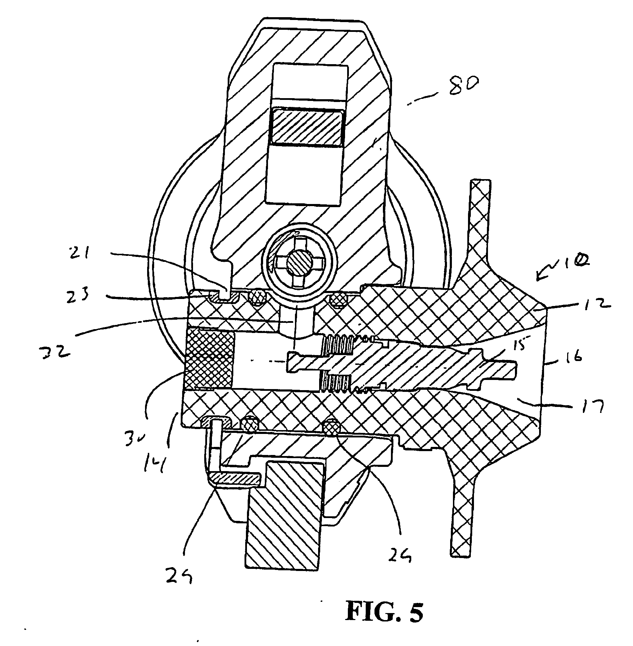

Figure 5 illustrates a sectional view showing an inflator properly secured to the inflator manifold of Figure 1.

### DETAILED DESCRIPTION OF THE INVENTION

As seen in the drawings, a single mold manifold body is shown and generally designated as manifold 10. Manifold 10 includes a body member 12 having a first end 14, second end 16 and a stem portion 13. A first main passageway 17 extends through said body member 12 from first end 14 to second end 16. A gas inlet opening 22 is provided on stem portion 13 and is in communication with passageway 17. A first o-ring groove 24 and a second o-ring groove 26 are disposed on the external surface of stem portion 13, with first o-ring groove 24 disposed on one side of gas inlet opening 22 and second o-ring groove 26 is disposed on opposite side opening 22. Stem portion 13 of manifold body 12 is preferably tubular (round) or substantially tubular (round) in shape and includes a preferably annular flange 18 for welding manifold 10 to an inflatable article. A mating portion of main passageway 17 can be threaded for attachment of a valve, such as but not limited to, a standard tire core valve or other one way valve or spring loaded one way valve. By mating the threads on the valve to the inner threads of passageway 17, the valve will be properly positioned within passageway 17 of manifold body 12.

Once the valve is properly positioned within body 12, a plug 30 is disposed at first end 14 and preferably can be permanently attached and sealed at first end 14 through RF or ultrasonic sealing or other sealing techniques. Once plug 30 is sealed at first end 14, gasses entering passageway 17 through inlet opening 22 are prevented from escaping out of passageway 17 through first end 14, thus, leaving only second end 16, through the attached valve, as the travel route for the gas. As such, the gas is directed through the valve and second end 16 and ultimately into the inflatable chamber of the article attached to annular flange 18.

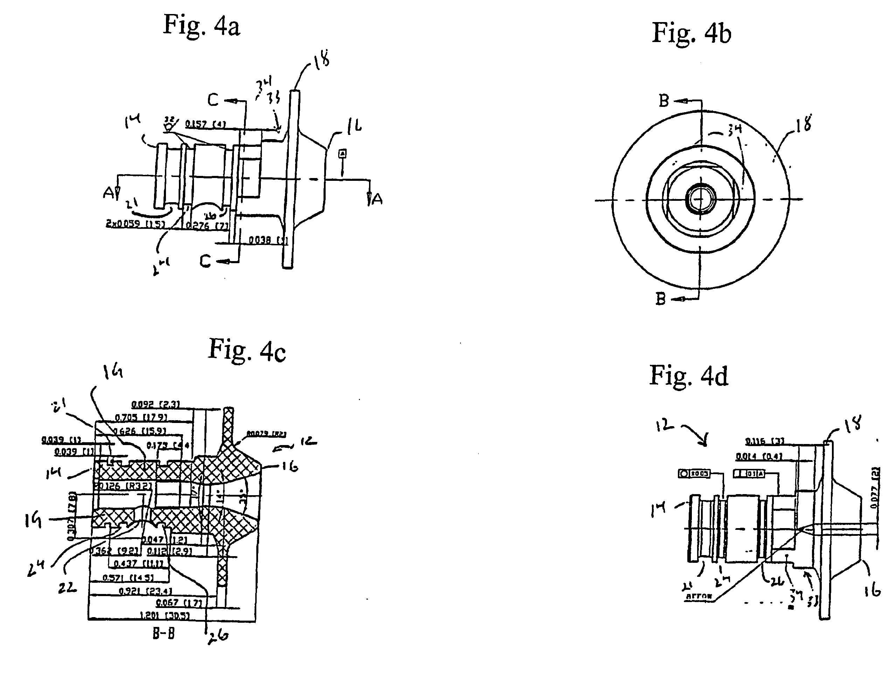

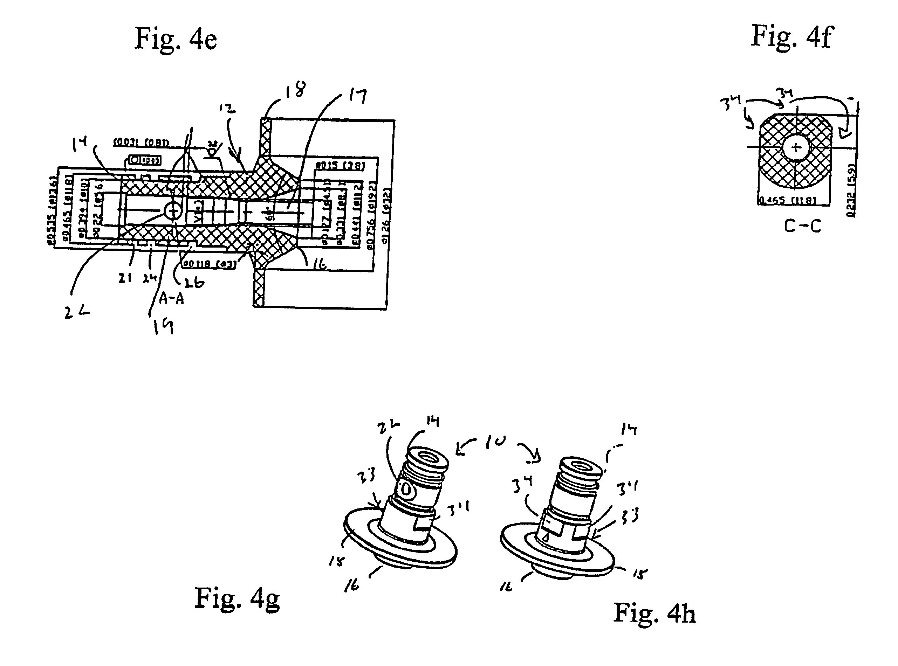

In use an inflator such as, but not limited to, a 1F or 3f CO₂ inflator is inserted over manifold body 12 and is properly aligned with respect to manifold 12 through one or more (and preferably three - though not limiting) flat or straight edges 34 which are disposed at a base area 33 of stem portion 13 (See Figure 4f). Flat/straight edges 34 properly aligned with a corresponding configuration in the inflator, and together preferably provide only one proper mating configuration for the inflator and manifold 10 to ensure that inflator is properly aligned with opening 22 of stem portion 13 to make sure that the gas in the inflator is always properly directed into passageway 17. When properly positioned, the inflator attached to stem portion 13 terminates prior to groove 21.

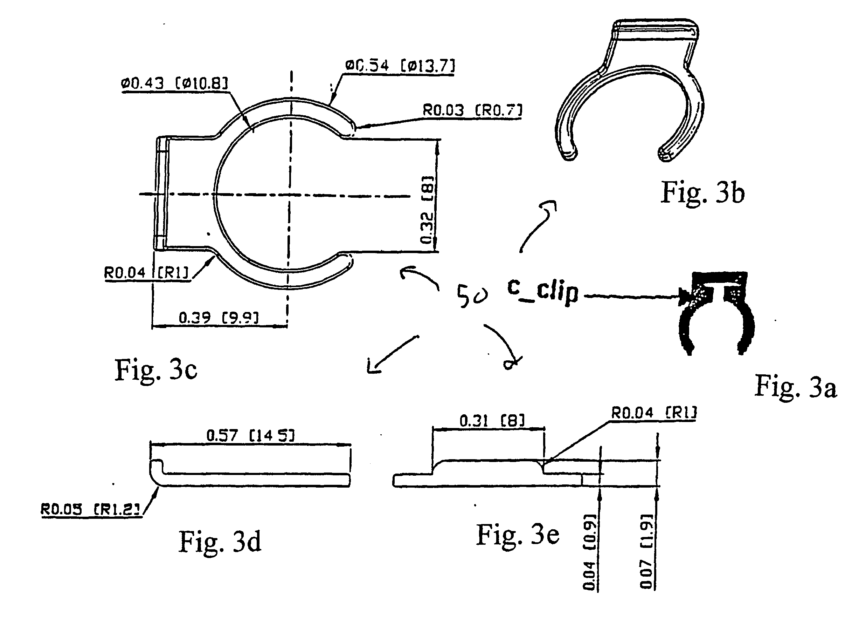

Once the proper alignment of the inflator to manifold body 12 is achieved, a substantially "C" shaped clip 50 is attached to manifold body 12 by disposing the clip 50 within groove 21 on stem portion 13 of manifold body 12 to maintain inflator in place on stem portion 13. Where clip 50 is constructed from metal, a metal sleeve, inset or insert 23 can be provided within groove 21 such that clip 50 abuts the metal sleeve, which may help reduce wear and tear on this area of stem portion 13 if metal clip 50 attached directly to plastic stem portion 13. Where clip 50 is not constructed from metal 50, the metal sleeve insert may be eliminated. Additionally, it is within the scope of the invention to also use a metal clip 50 without a metal sleeve insert. A preferred embodiment for clip 50 is shown in Figure 3a which includes a slotted area to allow clip 50 to expand when inserted into groove 21 for securement to body member 12.

Thus, the attachment of clip 50 to stem portion 13, provides a quick release stop member to prevent the inflator from moving off of properly attached position with respect to stem portion 13. Accordingly, once clip 50 is attached to manifold body 12 and the inflator is properly aligned with the straight edges 34 of base area 33, the inflator is properly position which causes gas released from the inflator to properly enter passageway 17 through inlet opening 22. In view of end 14 being sealed through plug 30, once inside passageway 17, the released gas travels through the attached valve and out of second end 16 into the inflatable chamber of the article attached to annular flange 18.

Applicant incorporates by reference in its entirety co-pending U.S. Application Serial No. 11/421,997 filed on June 2, 2006. This application shows a gas inflator 80 that can be used with the present invention manifold. However, the present invention manifold is not limited to use only with this particular gas inflator and can be used with other gas inflators and all are considered within the scope of the invention.

With the inflator properly attached, the O-rings 27 and 29 disposed within o-ring grooves 24 and 26, respectively, provide a seal (i.e. barrel seal) on both sides of inlet opening 22 between the inflator and stem portion to help prevent or reduce gas escaping from the inflator and not entering inlet opening 22. Accordingly, more of the gas within the inflator is directed through inlet opening 22 and into passageway 17.

In lieu of a substantially "C" shaped clip, other stop members can be quickly attached to the outer end 14 of stem portion 13, with or without a stem groove, to prevent the inflator from falling off from its position on stem portion and all are also considered within the scope of the invention. The stop members, including clip 50, provide for temporary or permanent attachment of the inflator to stem portion 13.

Manifold body 12 is preferably constructed from a sealable plastic material and can be molded from a single mold manifold.

Manifold 10 can be used with newly designed inflators and thus in a preferred embodiment does not have to be compatible with prior art inflators. As such, to increase the strength of plastic manifold body 12, the walls 19 of at least stem portion 13 can be thickened compared to the wall size of stem portions on metal/copper manifolds. The increase wall thickness increases the strength of stem portion 13. In a preferred embodiment, the walls are externally or outward thickened to keep the diameter of passageway 17 consistent with previous manifolds passageways, such that manifold 10 can be used with standard tire core valves and other one way valves, such as spring loaded one way valves. Though not considered limiting, in one embodiment the wall thickness of at least a portion of the manifold body member can be at least about .087 millimeters. However, it should be recognized that other thicknesses can be chosen and are considered within the scope of the invention.

Manifold 10 alleviates overtorqueing found with prior manifolds that cause damage to their end nuts, stem o-rings, gaskets or their plastic or metal construction.

The present invention allows for maintaining at approximately 850 to approximately 1500 psi, so that the user can safely mount and dismount without worry about damaging the life saving device.

The unibody construction of manifold 10 also allows the spread of force around infinite faces. By construction through a single mold, manifold 10 is cheaper to manufacture, which may allow an attached inflatable article, such as an inflatable PFD to increase its market share vs. similar foam products. Drowning protection for the user may also increase in view of multiple choices in inflation mechanisms and ease of replacement and maintenance.

It will be seen that the objects set forth above, and those made apparent from the foregoing description, are efficiently attained and since certain changes may be made in the above construction without departing from the scope of the invention, it is intended that all matters contained in the foregoing description shall be interpreted as illustrative and not in a limiting sense. The instant invention has been shown and described herein in what is considered to be the most practical and preferred embodiment.

## Claims

1. A manifold for a gas inflator, comprising:
a body member (12) having an elongated body wall, a first end (14) and a second end (16), a first internal passageway (17) beginning at the first end and ending at the second end (16) of said body member (12) and a gas inlet passageway (22) in communication with said first internal passageway (17) intermediate of said first second ends, said body member (12) having an opening at the second end (16) for escape of gas traveling through said first internal passageway (17), said body member (12) having an annular flange (18) approximate to the second end (16) of said body member; and
a valve disposed within said first internal passageway (17)
**characterized in that**
said body member (12) has an external annular retaining groove (21) disposed between said first end (14) and said inlet opening (22) and **in that**
a stop member (50) is disposable within the external annular retaining groove for retaining a gas inflator (80) to be secured to said body member.

2. The manifold of claim 1 wherein said inlet opening is disposed in a noun-groove portion of said elongated body wall and said body member (12) further comprises a first external annular groove (24) disposed on a first side of the inlet opening (22) and a second external annular groove (26) disposed on a second side of the inlet opening (22).

3. The manifold of claim 2 further comprising a first o-ring disposed within the first external annular groove (24) and a second o-ring disposed within the second external annular groove (26); wherein said first o-ring and said second o-ring aid in preventing or reducing gas leakage when transferring gas within the gas inlet passageway from a gas inflator secured to said single mold body member.

4. The manifold of any preceding claim wherein said valve is a core valve, one-way valve or spring loaded one way valve.

5. The manifold of any preceding claim wherein said first internal passageway (17) has a series of threads for mating with a thread or threads of said valve.

6. The manifold of claim 1 further comprising a plug permanently sealed at the first end (14) of said body member.

7. The manifold of any preceding claim, further comprising a metal insert disposed within said external annular retaining groove.

8. The manifold of claim 1 wherein said body member (12) has a specific external edge pattern near the annular flange (18) to provide a single proper mating pattern between said body member (12) and a gas inflator (80) to ensure that the gas inflator is properly secured to said body member (12) and to ensure that a gas outlet portion of the inflator is properly aligned with the inlet opening (22) of said body member.

9. The manifold of claim 1 wherein said body member (12) is constructed from plastics material.

10. The manifold of claim 9 wherein said body member (12) has at least a portion of its body wall thickened to at least about .087 millimeters.

11. The manifold of any preceding claim wherein the opening at said second end (16) of said body member tapers outwardly.

12. The manifold of claim 1, wherein said stop member is a substantially C- shaped metal clip member (50).

13. The manifold of claim 1, wherein said body member is a single mold body member, said gas inlet is a single gas inlet passageway and wherein said annular flange is disposed externally of the body member and is adapted for securement to an inflatable article.

## Patentansprüche

1. Verteiler für einen Gasgenerator, folgendes umfassend:
ein Gehäuseelement (12) mit einer elongierten Gehäusewand, einem ersten Ende (14) und einem zweiten Ende (16), einem ersten inneren Durchgang (17), der an dem ersten Ende beginnt und an dem zweiten Ende (16) des genannten Gehäuseelements (12) endet, und mit einem Gaseinlassdurchgang (22), der sich in Übertragungsverbindung mit dem genannten ersten inneren Durchgang (17) zwischen den genannten ersten und zweiten Enden befindet, wobei das genannte Gehäuseelement (12) eine Öffnung an dem zweiten Ende (16) aufweist, für den Austritt von Gas, das durch den genannten ersten inneren Durchgang (17) verläuft, wobei das genannte Gehäuseelement (12) einen ringförmigen Flansch (18) in der Nähe des zweiten Endes (16) des genannten Gehäuseelements aufweist; und wobei ein Ventil in dem genannten ersten inneren Durchgang (17) angeordnet ist; **dadurch gekennzeichnet, dass**:
das genannte Gehäuseelement (12) eine externe ringförmige Sicherungsrille (21) aufweist, die zwischen dem genannten ersten Ende (14) und der genannten Einlassöffnung (22) angeordnet ist; und wobei
ein Anschlagelement (50) in der genannten externen ringförmigen Sicherungsrille angeordnet werden kann, um einen Gasgenerator (80) zu sichern, der an dem genannten Gehäuseelement angebracht werden soll.

2. Verteiler nach Anspruch 1, wobei die genannte Einlassöffnung in einem rillenlosen Teilstück der genannten elongierten Gehäusewand angeordnet ist, und wobei das genannte Gehäuseelement (12) ferner eine erste externe ringförmige Rille (24) umfasst, die auf einer ersten Seite der Einlassöffnung (22) angeordnet ist, und mit einer zweiten externen ringförmigen Rille (26), die auf einer zweiten Seite der Einlassöffnung (22) angeordnet ist.

3. Verteiler nach Anspruch 2, wobei dieser ferner einen ersten O-Ring umfasst, der in der ersten externen ringförmigen Rille (24) angeordnet ist, und mit einem zweiten O-Ring, der in der zweiten externen ringförmigen Rille (26) angeordnet ist; wobei der genannte erste O-Ring und der genannte zweite O-Ring die Prävention oder Reduzierung eines Gasaustritts unterstützt, wenn Gas in dem Gaseinlassdurchgang von einem Gasgenerator übertragen wird, der an dem genannten einzelnen Formgehäuseelement angebracht ist.

4. Verteiler nach einem der vorstehenden Ansprüche, wobei es sich bei dem genannten Ventil um ein Kegelventil, ein Einwegventil oder ein gefedertes Einwegventil handelt.

5. Verteiler nach einem der vorstehenden Ansprüche, wobei der genannte erste innere Durchgang (17) eine Reihe von Gewinden zur Zusammenführung mit einem Gewinde oder Gewinden des genannten Ventils aufweist.

6. Verfahren nach Anspruch 1, wobei dieser ferner einen Stopfen umfasst, der dauerhaft an dem ersten Ende (14) des genannten Gehäuseelements dicht verschließt.

7. Verteiler nach einem der vorstehenden Ansprüche, wobei dieser ferner einen Metalleinsatz umfasst, der in der genannten externen ringförmigen Sicherungsrille angeordnet ist.

8. Verteiler nach Anspruch 1, wobei das genannte Gehäuseelement (12) ein spezifisches externes Randmuster nahe dem ringförmigen Flansch (18) aufweist, um ein einzelnes, in geeigneter Weise zusammenpassendes Muster zwischen dem genannten Gehäuseelement (12) und einem Gasgenerator (80) bereitzustellen, um sicherzustellen, dass der Gasgenerator ordnungsgemäß an dem genannten Gehäuseelement (12) gesichert wird, und um sicherzustellen, dass ein Gasauslassteilstück des Generators entsprechend mit der Einlassöffnung (22) des genannten Gehäuseelements ausgerichtet ist.

9. Verteiler nach Anspruch 1, wobei das genannte Gehäuseelement (12) aus Kunststoff hergestellt wird.

10. Verteiler nach Anspruch 9, wobei das genannte Gehäuseelement (12) zumindest ein Teilstück der genannten Gehäusewand mit einer Verdickung auf mindestens etwa 0,087 Millimeter aufweist.

11. Verteiler nach einem der vorstehenden Ansprüche, wobei die Öffnung an dem genannten zweiten Ende (16) des genannten Gehäuseelements eine Konizität nach außen aufweist.

12. Verteiler nach Anspruch 1, wobei es sich bei dem genannten Anschlagelement um ein im Wesentlichen C-förmiges Metallklammerelement (50) handelt.

13. Verteiler nach Anspruch 1, wobei es sich bei dem genannten Gehäuseelement um ein einzelnes Formgehäuseelement handelt, wobei es sich bei dem genannten Gaseinlass um einen einzelnen Gaseinlassdurchgang handelt, und wobei der genannte ringförmige Flansch außerhalb des genannten Gehäuseelements angeordnet ist und sich zur Befestigung an einem befüllbaren Objekt eignet.

## Revendications

1. Collecteur pour un dispositif de gonflage à gaz, comprenant :
un élément de corps (12) ayant une paroi de corps allongée, une première extrémité (14) et une seconde extrémité (16), un premier passage interne (17) commençant à la première extrémité et se terminant à la seconde extrémité (16) dudit élément de corps (12) et un passage d'entrée de gaz (22) en communication avec ledit premier passage interne (17) intermédiaire entre lesdites première et seconde extrémités, ledit élément de corps (12) ayant une ouverture au niveau de la seconde extrémité (16) pour l'évacuation des gaz passant à travers ledit premier passage interne (17), ledit élément de corps (12) ayant une bride annulaire (18) proche de ladite seconde extrémité (16) dudit élément de corps ; et une vanne disposée à l'intérieur dudit premier passage interne (17) **caractérisé en ce que**
ledit élément de corps (12) a une rainure de retenue annulaire externe (21) disposée entre ladite première extrémité (14) et ladite ouverture d'entrée (22) et **en ce que**
un élément de butée (50) peut être disposé à l'intérieur de la rainure de retenue annulaire externe pour retenir un dispositif de gonflage à gaz (80) devant être fixé audit élément de corps.

2. Collecteur selon la revendication 1, dans lequel ladite ouverture d'entrée est disposée dans une partie sans rainure de ladite paroi de corps allongée et ledit élément de corps (12) comprend une première rainure annulaire externe (24) disposée sur un premier côté de l'ouverture d'entrée (22) et une seconde rainure annulaire externe (26) disposée sur un second côté de l'ouverture d'entrée (22).

3. Collecteur selon la revendication 2, comprenant en outre un premier joint torique disposé à l'intérieur de la première rainure annulaire externe (24) et un second joint torique disposé à l'intérieur de la seconde rainure annulaire externe (26) ; dans lequel ledit premier joint torique et ledit second joint torique aident à prévenir ou à réduire les fuites de gaz lors du transfert de gaz à l'intérieur du passage d'entrée de gaz depuis un dispositif de gonflage à gaz fixé audit élément de corps d'un seul bloc.

4. Collecteur selon l'une quelconque des revendications précédentes, dans lequel ladite vanne est une vanne centrale, une vanne antiretour ou une vanne antiretour à ressort.

5. Collecteur selon l'une quelconque des revendications précédentes, dans lequel ledit premier passage interne (17) a une série de filets pour s'accoupler à un ou plusieurs filets de ladite vanne.

6. Collecteur selon la revendication 1, comprenant en outre un bouchon scellé de manière permanente à la première extrémité (14) dudit élément de corps.

7. Collecteur selon l'une quelconque des revendications précédentes, comprenant en outre un insert métallique disposé à l'intérieur de ladite rainure de retenue annulaire externe.

8. Collecteur selon la revendication 1, dans lequel ledit élément de corps (12) a un modèle de bord externe spécifique près de la bride annulaire (18) pour fournir un modèle d'accouplement approprié unique entre ledit élément de corps (12) et un dispositif de gonflage à gaz (80) afin de s'assurer que le dispositif de gonflage à gaz est correctement fixé audit élément de corps (12) et de s'assurer qu'une partie de sortie de gaz du dispositif de gonflage est correctement alignée avec l'ouverture d'entrée (22) dudit élément de corps.

9. Collecteur selon la revendication 1, dans lequel ledit élément de corps (12) est construit à partir de matière plastique.

10. Collecteur selon la revendication 9, dans lequel ledit élément de corps (12) a au moins une partie de sa paroi de corps d'une épaisseur d'au moins environ 0,087 millimètre.

11. Collecteur selon l'une quelconque des revendications précédentes, dans lequel l'ouverture au niveau de ladite seconde extrémité (16) dudit élément de corps s'effile vers l'extérieur.

12. Collecteur selon la revendication 1, dans lequel ledit élément de butée est un élément de clip métallique sensiblement en forme de C (50).

13. Collecteur selon la revendication 1, dans lequel ledit élément de corps est un élément de corps d'un seul bloc, ladite entrée de gaz est un passage d'entrée de gaz unique et dans lequel ladite bride annulaire est disposée à l'extérieur de l'élément de corps et est adaptée pour être fixée à un article gonflable.
